# EUROPÄISCHE PATENTSCHRIFT

(11) **EP 0 765 776 B1**
(45) Veröffentlichungstag und Bekanntmachung des Hinweises auf die Patenterteilung: **07.11.2001**
(21) Anmeldenummer: 96113437.6
(22) Anmeldetag: 22.08.1996
(51) Int. Cl.: B60N 2/06, F16C 29/04

(54) **Rollenführung für einen längsverstellbaren Sitz**
Roller guide for longitudinally adjustable seat therefor
Galet de guidage pour siège réglable longitudinalement

(30) Priorität: 29.09.1995 DE 19536343
(43) Veröffentlichungstag der Anmeldung: 02.04.1997
(73) Patentinhaber: Volkswagen Aktiengesellschaft, 38436 Wolfsburg (DE)
(72) Erfinder: Dilger, Erich, Dipl.-Ing., 38442 Wolfsburg (DE); Schweissgut, Jakob, Dipl.-Ing., 38452 Leiferde (DE); Schwarzer, Jürgen, 38110 Braunschweig (DE)
(74) Vertreter: Schneider, Henry, Dipl.-Ing.

(56) Entgegenhaltungen:
- EP-A- 0 090 235
- EP-A- 0 568 852
- DE-A- 19 519 153
- DE-C- 3 642 441
- DE-C- 19 648 170
- FR-A- 2 656 513
- GB-A- 936 839
- JP-A- 7 081 467
- JP-A- 7 215 105
- US-A- 5 348 261
- US-A- 5 368 396

## Beschreibung

Die Erfindung betrifft eine Rollenführung für einen längsverstellbaren Sitz, insbesondere für Kraftfahrzeuge und Wohnwagen, nach dem Oberbegriff des Anspruchs 1.

Rollenführungen für einen längsverstellbaren Sitz sind bekannt. Sie zeichnen sich gegenüber bekannten Gleitführungen durch Leichtgängigkeit und gegenüber ebenfalls bekannten Kugel- oder Wälzlagerführungen (DE 43 18 943 A1, DE 43 06 856 A1, DE 43 05 508 A1) durch eine geringere Verschmutzungsanfälligkeit aus. Aus der US 5,348,261 A ist eine Rollenführung bekannt, die eine aus einem Hohlprofil gebildete Führungsschiene mit einer Lauffläche für zwei im Abstand an einem Sitzgestell angeordnete Schieberollen sowie jeweils ein Andruckelement für die Schieberollen aufweist, das an der Innenseite der der Lauffläche gegenüberliegenden oberen Profilwandung gleitend angeordnet ist und die Schieberolle vermittels eines Halterungsarmes in Richtung auf die Lauffläche beaufschlagt. Bei dieser Rollenführung bleiben sich ansammelnder Staub und Schmutzkörper auf der Lauffläche haften und beeinträchtigen bis hin zum Blockieren der Sitzverstellung deren Leichtgängigkeit.

Zur Verhinderung der Staub- und Schmutzkörperansammlung auf der Lauffläche ist gemäß der DE 4333552 A1 vorgeschlagen worden, die Lauffläche für die Schieberollen nach oben gewölbt auszubilden, so daß die Schieberollen die Lauffläche nur noch linienförmig berühren, und zusätzlich seitliche Führungsrollen anzuordnen. Infolge der Wölbung der Lauffläche rollen die Schmutzkörper von deren Mitte seitlich nach unten oder werden von den Schieberollen nach unten/ außen gedrückt. Zusätzlich können jeweils auf der Schiebevorder- und - rückseite einer Schieberolle unmittelbar über der Lauffläche ein Verunreinigungen beiseiteschiebendes Räumelement angeordnet sein. Diese Rollenführung ist relativ aufwendig. Aus der DE-C-3642441 ist eine Rollenführung gemäß dem Oberbegriff des Anspruchs 1 bekannt. Der Erfindung liegt die Aufgabe zugrunde, eine Rollenführung für einen längsverstellbaren Sitz nach dem Oberbegriff des Anspruchs 1 zu schaffen, die leichtgängig und verschmutzungsunanfällig ist, und bei der mit einfachen Mitteln auch eine stabile und sichere Seitenführung gegeben ist.

Diese Aufgabe wird bei einer derartigen Rollenführung durch die kennzeichnenden Merkmale des Anspruchs 1 gelöst. Danach weist die Führungsschiene eine geteilte Lauffläche auf, deren Teillaufflächen zur Verschiebeebene und zueinander geneigt und im Abstand zueinander ausgebildet sind, und die Schieberolle zu beiden Seiten ihres Umfangs eine Rollfläche für diese aufweist und in der Führungsschiene im Bereich zwischen den Teillaufflächen eine im wesentlichen rinnenartige Vertiefung angeordnet ist. Die schräg nach innen angeordneten Teillaufflächen verschmutzen weniger, größere Schmutzpartikel gleiten an ihnen ab und sammeln sich in der wannenartigen Vertiefung. Die dort angesammelten Verunreinigungen behindern die Schieberolle bei einer Sitzverstellung nicht. Zudem ist durch die erfindungsgemäße Teillaufflächenanordnung auch eine zuverlässige und sichere Seitenführung gegeben.

Vorteilhafte Ausgestaltungen sind in den Unteransprüchen angegeben.

Nach Anspruch 2 weisen die Teillaufflächen einen V-förmigen Profilbereich auf, wodurch zwangsläufig unter der Schieberolle eine V-förmige Vertiefung zur Aufnahme von Staub und Schmutzpartikeln gegeben ist. In dem sitzseitig angeordneten Schlitz ist die an einem Fuß des Sitzgestells angeordnete Halterung in Längsverstellrichtung frei bewegbar.

Die Andruckrolle kann gemäß Anspruch 5 vermittels eines polygonalen Gummilagers am Fuß des Sitzgestells gehaltert sein, wodurch in Verbindung mit einem Halterungsarm und der Abstützung der Andruckrolle an der der Lauffläche gegenüberliegenden oberen Wandung des Hohlprofils Druck auf die Schieberolle in Richtung auf die Lauffläche ausgeübt werden kann.

Das Gummilager kann gemäß Anspruch 8 eine zentrisch in diesem angeordnete Lagerhülse aufweisen, in der die Achse für die Schieberolle geführt und an der zugleich auch der Halterungsarm für die Andruckrolle angeordnet sind. Dadurch können die Schieberolle und die Andruckrolle vormontiert und zu einer Baueinheit vereint werden.

Die Schieberolle hat vorteilhafterweise gegenüber der Andruckrolle einen großen Durchmesser, da eine größere Schieberolle kleine Laufflächenunebenheiten besser kompensiert als eine kleine und gegebenenfalls auf den Teillaufflächen lagernde Verunreinigungen leichter überrollt werden können.

Die Schieberolle und die Andruckrolle können aus glasfaserverstärktem Polybutylenterephalat oder einem hinsichtlich seiner physikalischen Eigenschaften damit vergleichbaren Werkstoff gefertigt sein, wodurch beim Verstellen des Sitzes auftretende Rollgeräusche minimiert sind und auch ein an der Schieberolle auftretender Verschleiß gering gehalten wird.

Die Erfindung wird nachstehend an einem Ausführungsbeispiel erläutert. In der zugehörigen Zeichnung zeigen:
- Fig. 1:: eine perspektivische Darstellung einer erfindungsgemäßen Rollenführung, schematisch,
- Fig. 2:: einen Schnitt durch die Rollenführung, quer zur Verstellrichtung, und
- Fig. 3:: die Anordnung der Andruckrolle als Einzelheit, teilweise geschnitten.
- Fig. 4:: eine vorteilhafte Achsenkonstruktion für die Rollenführung.

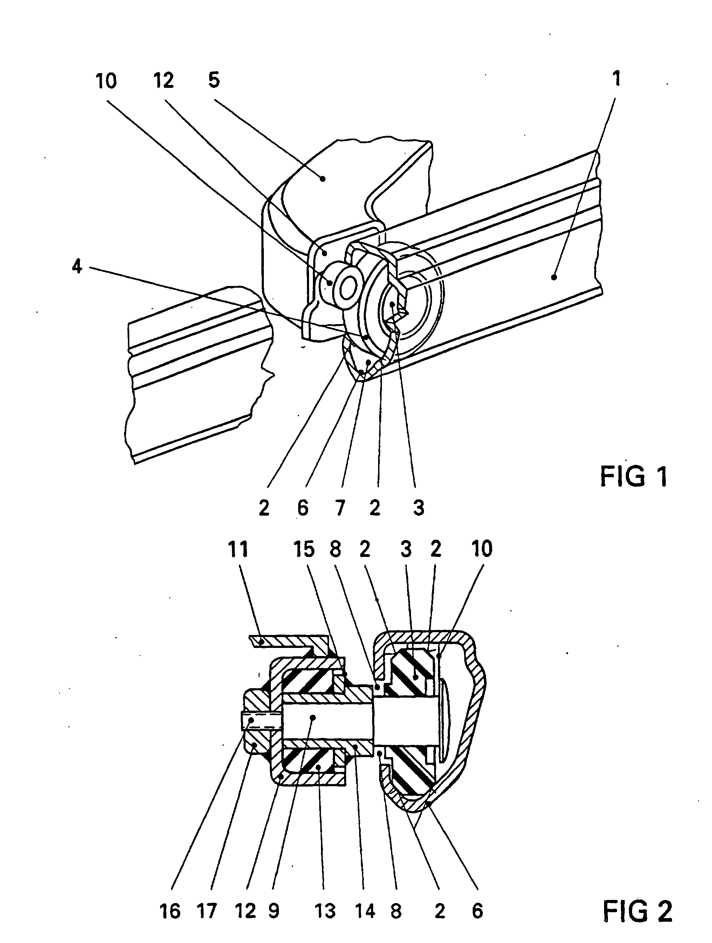

Die Rollenführung weist eine am Fahrzeug befestigbare und aus einem Hohlprofil gebildete Führungsschiene 1 mit zwei Teillaufflächen 2 und zwei in dieser angeordnete Schieberollen 3 mit zu beiden Seiten ihres Umfangs ausgebildeten Rollflächen 4 auf. In Fig. 1 ist nur eine von zwei in Fahrzeuglängsrichtung parallel zueinander angeordneten Führungsschienen 1 und auch nur eine der beiden im Abstand in einer Führungsschiene 1 geführten und an einem Sitzgestell 5 angeordneten Schieberollen 3 gezeigt. In der dargestellten erfindungsgemäßen Führungsschiene 1 ist zwischen den Teillaufflächen 2 eine hier im wesentlichen V-förmige Vertiefung 6 angeordnet, durch die unter den Schieberollen 3 im Bereich zwischen den Rollflächen 4 ein Hohlraum 7 gegeben ist. Dieser Hohlraum 7 dient als Auffangraum für Schmutzpartikel. Die Führungsschiene 1 hat auf der Seite des Sitzgestells 5 eine schlitzartige Ausnehmung 8 (Fig. 2), in der die Achsen 9 für die Schieberollen 3 längsbewegbar angeordnet sind. Die Schieberollen 3 sind durch jeweils eine Andruckrolle 10 in Richtung auf die Teillaufflächen 2 beaufschlagt.

Fig. 2 zeigt die Halterung der Schieberolle 3 mit ihrer Achse 9 an einem Fuß 11 des Sitzgestells 5. Der Fuß 11 ist hat eine napfförmige Aufnahme 12 polygonartiger, vorzugsweise quadratischer, Form, in deren sitzseitiger Wandung die Achse 9 festgeschraubt ist, wobei die Achse 9 durch eine mit einem an der Aufnahme 12 eingepaßten quaderförmigen Gummilager 13 fest verbundene Lagerhülse 14 zur Führungsschiene 1 geführt ist. An dieser Lagerhülse 14 ist eine Halterungsarm 15 für die Andruckrolle 10 angeordnet. In Verbindung mit dem Gummilager 13 ist die Anordnung dieses Halterungsarmes 15 torsionselastisch, und die Andruckrolle 10 ist so angeordnet, daß sie an der oberen Wandung der Führungsschiene 1 abgestützt ist und in Verbindung mit dieser einen Druck auf die Schieberolle 3 in Richtung auf die beiden Teillaufflächen 2 ausübt.

Die Achse 9 ist abgesetzt und zwar derart, daß durch deren Befestigung am Fuß 11 sowohl die Schieberolle 3 als auch das Gummilager 13 mit der Lagerhülse 14 und dem Halterungsarm 15 an diesem drehbar befestigt sind. An ihrem der Schieberolle 3 abgewandten Ende weist die Achse 9 einen Gewindeansatz 16 für eine Befestigungsmutter 17 auf.

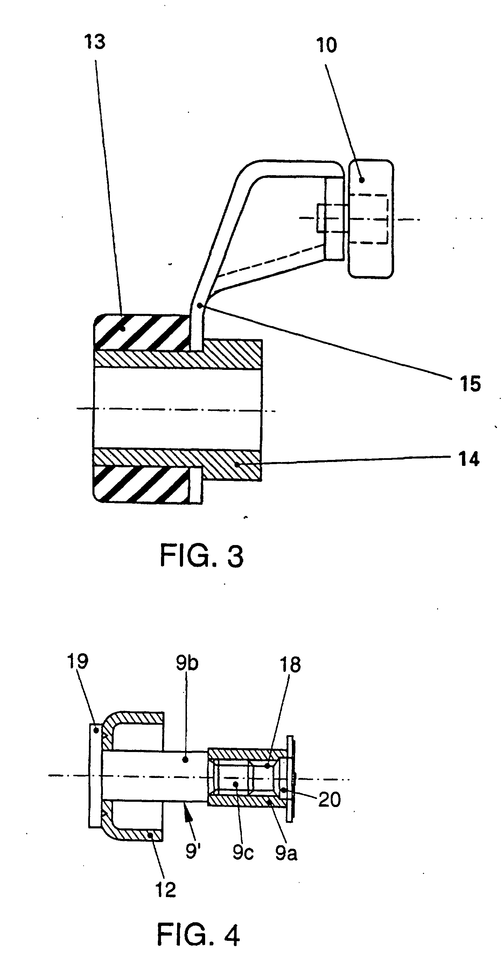

In Fig. 3 ist die Anordnung der Andruckrolle 10 an der mit dem Gummilager 13 fest verbundenen Lagerhülse 14 vermittels des Halterungsarmes 15 dargestellt. Das Gummilager 13 wird in der Aufnahme 12 so angeordnet, daß die Andruckrolle 10 sowohl an der Schieberolle 3 als auch an der oberen Wandung der Führungsschiene 1 zur Anlage kommt (Fig. 1, Fig. 2).

Zur Realisierung eines vereinfachten Zusammenbaus und Bereitstellung einer erhöhten Dauerfestigkeit ist bei dem Ausführungsbeispiel in Fig. 4 die Achse 9' aus einer Laufhülse 9a und einem durch die napfförmige Aufnahme hindurchgeführten Zapfen 9b zusammengesetzt, der einenends zur Befestigung der mit einer Gewindebohrung 18 versehenen Laufhülse 9a einen Gewindeansatz 9c und anderenends zur Festlegung gegenüber der napfförmigen Aufnahme 12 einen Halteflansch 19 aufweist. Letzterer ist vorzugsweise über Buckel oder Heftpunkte mit dem hier nicht weiter bezifferten Boden der Aufnahme 12 verschweißt. Wesentlicher Bestandteil der Laufhülse 9a ist auch ein Werkzeugeingriffprofil 20 (Innensechskant, Torx, Schlitz oder dergleichen), welches der werkzeugbetätigten Verschraubung der Laufhülse 9a mit dem Gewindeansatz 9c dient.

## Patentansprüche

1. Rollenführung für einen längsverstellbaren Sitz, insbesondere für Kraftfahrzeuge und Wohnwagen, mit am Fahrzeug befestigbaren Führungsschienen (1) mit jeweils einer im Wesentlichen parallel zur Verschiebebene angeordneten Lauffläche (2) für zumindest eine mit dem Sitz verbundene Schieberolle (3) und einer oberhalb der Schieberolle (3) angeordneten Führungsfläche, wobei die Schieberolle (3) auf der Lauffläche (2) und eine Andruckrolle (10) auf der Führungsfläche und auf der Lauffläche der Schieberolle abrollbar angeordnet sind, wobei die Führungsschiene (1) aus einem Hohlprofil gebildet ist, das sitzseitig eine an die Verstelllänge angepasste schlitzförmige Ausnehmung (8) für eine Halterung (9) für die Schieberolle (3) und die Andruckrolle (10) aufweist, die Führungsfläche der Führungsschiene (1) eben ausgebildet ist und die Andruckrolle (10) derartig vorgespannt gelagert ist, dass über die Andruckrolle (10) eine Andruckkraft der Schieberolle (3) auf die Lauffläche (2) erfolgt, **dadurch gekennzeichnet, dass** die Lauffläche der Führungsschiene (1) zwei zur Verschiebeebene und zueinander geneigte und im Abstand ausgebildete Teillaufflächen (2) umfasst, die Schieberolle (3) zu beiden Seiten ihres Umfanges ausgebildete Rollflächen (4) für diese aufweist, so dass unter der Schieberolle (3) in der Führungsschiene (1) im Bereich zwischen den Teillaufflächen (2) eine im Wesentlichen rinnenartige Vertiefung (6) angeordnet ist, und daß die Vorspannung der Andruckrolle (10) über ein torsionsfederartig wirkendes Gummilager (13) erfolgt.

2. Rollenführung nach Anspruch 1, **dadurch gekennzeichnet, dass** die Teillaufflächen (2) der Führungsschiene (1) einen V-förmigen Profilbereich aufweisen.

3. Rollenführung nach Anspruch 2, **dadurch gekennzeichnet, dass** das Hohlprofil an der dem Sitz abgewandten Seite Ausnehmungen zur Gewichtsersparnis aufweist.

4. Rollenführung nach Anspruch 2 oder 3, **dadurch gekennzeichnet, dass** die Halterung (9) für die Schieberolle (3) an einem Fuß (11) des Sitzgestells (5) befestigt ist.

5. Rollenführung nach Anspruch 4, **dadurch gekennzeichnet, dass** die Andruckrolle (10) an einem Halterungsarm (15) drehbeweglich angeordnet ist, der vermittels eines polygonalen Gummilagers (13) im Fuß (11) gehaltert ist.

6. Rollenführung nach einem der vorhergehenden Ansprüche, **dadurch gekennzeichnet, dass** die Schieberolle (3) im Verhältnis zur Andruckrolle (10) einen großen Durchmesser hat.

7. Rollenführung nach Anspruch 5, **dadurch gekennzeichnet, dass** der Fuß (11) des Sitzgestells (5) führungsschienenseitig eine an die Form des Gummilagers (13) angepasste Aufnahme (12) für dieses aufweist.

8. Rollenführung nach Anspruch 5, **dadurch gekennzeichnet, dass** das Gummilager (13) eine zentrisch angeordnete Lagerhülse (15) aufweist, durch die die Halterung (9) für die Schieberolle (3) geführt und an der der Halterungsarm (15) für die Andruckrolle (10) angeordnet ist und die in Verbindung mit dem Gummilager (13) eine Torsionsfeder darstellt.

9. Rollenführung nach einem der vorstehenden Ansprüche, **dadurch gekennzeichnet, dass** die Schieberolle (3) und die Andruckrolle (10) aus Polybutylenterephalat gefertigt sind.

10. Rollenführung gemäß wenigstens einem der vorstehenden Ansprüche, **dadurch gekennzeichnet, dass** als Achsenkonstruktion für die Lagerung der Schieberolle (3) eine mit einem Werkzeugeingriffprofil (20) versehene Laufhülse (9a) vorgesehen ist, die an einer sitzgestellfesten Aufnahme (12) über wenigstens ein angeformtes Haltemittel (18) zumindest mittelbar festlegbar ist.

## Claims

1. A roller guide for a longitudinally displaceable seat, in particular for motor vehicles and campers, having guide rails (1) securable to the vehicle and with a respective running surface (2) arranged substantially parallel to the displacement plane for at least one slide roller (3) connected to the seat and a guide surface situated above the slide roller (3), wherein the slide roller (3) is arranged in a rolling manner on the running surface (2) and a contact roller (10) is arranged in a rolling manner on the guide surface and on the running surface of the slide roller, wherein the guide rail (1) is formed from a hollow section having on the side towards the seat a slot-shaped recess (8) adapted to the displacement length for a retaining means (9) for the slide roller (3) and the contact roller (10), the guide surface of the guide rail (1) is flat, and the contact roller (10) is mounted prestressed in such a way that there is a contact force of the slide roller (3) upon the running surface (2) by way of the contact roller (10), **characterized in that** the running surface of the guide rail (1) comprises two spaced partial running surfaces (2) inclined with respect to the displacement plane and with respect to each other, [and] the slide roller (3) has rolling surfaces (4) formed on both sides of the periphery thereof for it, so that a substantially channel-like depression (6) is situated below the slide roller (3) in the guide rail (1) in the region between the partial running surfaces (2).

2. A roller guide according to Claim 1, **characterized in that** the partial running surfaces (2) of the guide rail (1) have a V-shaped profile area.

3. A roller guide according to Claim 2, **characterized in that** on the side remote from the seat the hollow section has recesses in order to save weight.

4. A roller guide according to Claim 2 or 3, **characterized in that** the retaining means (9) for the slide roller (3) is secured to a foot (11) of the seat frame (5).

5. A roller guide according to Claim 4, **characterized in that** the contact roller (10) is arranged in a rotatably movable manner on a retaining arm (15) held in the foot (11) by means of a polygonal rubber bearing (13).

6. A roller guide according to one of the preceding Claims, **characterized in that** the slide roller (3) has a larger diameter than the contact roller (10).

7. A roller guide according to Claim 5, **characterized in that** on the side towards the guide rail the foot (11) of the seat frame (5) has a receiving means (12) - adapted to the shape of the rubber bearing (13) - for the said rubber bearing (13).

8. A roller guide according to Claim 5, **characterized in that** the rubber bearing (13) has a centrally arranged bearing sleeve (15) through which the retaining means (9) for the slide roller (3) is guided and on which the retaining arm (15) for the contact roller (10) is arranged and which in conjunction with the rubber bearing (13) forms a torsion spring.

9. A roller guide according to one of the preceding Claims, **characterized in that** the slide roller (3) and the contact roller (10) are produced from polybutylene terephthalate.

10. A roller guide according to at least one of the preceding Claims, **characterized in that** a running sleeve (9a), provided with a tool-engagement section (20) and securable at least indirectly by way of at least one integrally formed retaining means (18) to a receiving means (12) fixed to the seat frame, is provided as an axle structure for the mounting of the slide roller (3).

## Revendications

1. Guidage à rouleaux pour un siège réglable en longueur, en particulier pour des véhicules et des caravanes, avec des glissières (1) susceptibles d'être fixées au véhicule, dotées respectivement d'une surface de roulement (2) disposée essentiellement de manière parallèle à un plan coulissant pour au moins un rouleau coulissant (3) relié au siège, et d'une surface de guidage ménagée au-dessus du rouleau coulissant (3), le rouleau coulissant (3) sur la surface de roulement (2) et un rouleau de pression (10) sur la surface de guidage et sur la surface de roulement du rouleau coulissant étant disposés de manière à pouvoir dérouler, la glissière (1) étant formée d'un profil creux qui présente côté siège un évidement à fente (8) adapté à la longueur de réglage pour un support (9) destiné au rouleau coulissant (3) et au rouleau de pression (10), la surface de guidage de la glissière (1) étant plate et le rouleau de pression (10) étant en position de précontrainte telle qu'une force de pression du rouleau coulissant (3) par l'intermédiaire du rouleau de pression (10) s'exerce sur la surface de roulement (2), **caractérisé en ce que** la surface de roulement de la glissière (1) comprend deux surfaces de roulement partielles (2) situées à distance et inclinées vers le plan coulissant ainsi que l'une vers l'autre, le rouleau coulissant (3) présente des surfaces de roulement (4) formées des deux côtés de sa circonférence utilisées pour celui-ci, de telle sorte qu'une cavité essentiellement en forme de rainure (6) soit disposée sous le rouleau coulissant (3) dans la glissière (1), dans la zone comprise entre les surfaces de roulement partielles (2), et **en ce que** la précontrainte du rouleau de pression (10) est produite au moyen d'un silentbloc (13) agissant comme barre de torsion.

2. Guidage à rouleaux selon la revendication 1, **caractérisé en ce que** les surfaces de roulement partielles (2) de la glissière (1) présentent une zone profilée en forme de V.

3. Guidage à rouleaux selon la revendication 2, **caractérisé en ce que** le profil creux présente, du côté tourné vers le siège, des évidements destinés à gagner du poids.

4. Guidage à rouleaux selon la revendication 2 ou la revendication 3, **caractérisé en ce que** le support (9) destiné au rouleau coulissant (3) est fixé à un pied (11) de la carcasse de siège (5).

5. Guidage à rouleaux selon la revendication 4, **caractérisé en ce que** le rouleau de pression (10) est disposé de manière à pouvoir effectuer un mouvement rotatif sur un bras de support (15) qui est maintenu au moyen d'un silentbloc polygonal (13) dans le pied (11).

6. Guidage à rouleaux selon l'une quelconque des revendications précédentes, **caractérisé en ce que** le rouleau coulissant (3) présente un diamètre important par rapport au rouleau de pression (10).

7. Guidage à rouleaux selon la revendication 5, **caractérisé en ce que** le pied (11) de la carcasse de siège (5) présente, côté glissière, un logement (12) adapté à la forme du silentbloc (13).

8. Guidage à rouleaux selon la revendication 5, **caractérisé en ce que** le silentbloc (13) présente un manchon de support (15) disposé au centre dans lequel est guidé le support (9) destiné au rouleau coulissant (3) et sur lequel est disposé le bras de support (15) destiné au rouleau de pression (10), et qui forme en relation avec le silentbloc (13) une barre de torsion.

9. Guidage à rouleaux selon l'une quelconque des revendications précédentes, **caractérisé en ce que** le rouleau coulissant (3) et le rouleau de pression (10) sont fabriqués à partir de polybutylène-téréphtalate.

10. Guidage à rouleaux selon au moins l'une quelconque des revendications précédentes, **caractérisé en ce qu'**un manchon de roulement (9a) doté d'un profil de mise en prise d'outils (20) est prévu comme construction axiale pour loger le rouleau coulissant (3), lequel manchon peut être fixé au moins indirectement sur un logement inamovible par rapport à la carcasse de siège (12) par l'intermédiaire d'un moyen de retenue moulé (18).
